# EUROPÄISCHE PATENTSCHRIFT

(11) **EP 4 062 727 B1**
(45) Veröffentlichungstag und Bekanntmachung des Hinweises auf die Patenterteilung: **19.02.2025**
(21) Anmeldenummer: 22162097.4
(22) Anmeldetag: 15.03.2022
(51) Int. Cl.: A01B 59/042, A01B 61/02, A01B 73/04, A01B 49/02

(54) **LANDWIRTSCHAFTLICHES GERÄT**
AGRICULTURAL IMPLEMENT
APPAREIL AGRICOLE

(30) Priorität: 25.03.2021 DE 102021107451
(43) Veröffentlichungstag der Anmeldung: 28.09.2022
(73) Patentinhaber: Pöttinger Landtechnik GmbH, 4710 Grieskirchen (AT)
(72) Erfinder: KALTSEIS, Martin, 4710 Grieskirchen (AT); MEINDLHUMER, Wilhelm, 4710 Grieskirchen (AT); LEHNER, Thomas, 4710 Grieskirchen (AT)
(74) Vertreter: Thoma, Michael

(56) Entgegenhaltungen:
- EP-B1- 3 311 650
- DE-U1- 8 814 325
- US-A- 3 198 550

## Beschreibung

Die vorliegende Erfindung betrifft landwirtschaftliche Boden- und/oder Grünlandbearbeitungsgeräte mit einem Maschinenrahmen, zumindest einer vom Maschinenrahmen quer zur Fahrtrichtung auskragenden Funktionswerkzeug-Baugruppe zum Erbringen der bestimmungsgemäßen landwirtschaftlichen Funktion des Geräts, sowie zumindest einer Zugstrebe, die einen Seitenabschnitt der Funktionswerkzeug-Baugruppe abspannt.

Bodenbearbeitungsgeräte wie Grubber oder Eggen haben bei größeren Arbeitsbreiten zunehmend weiter vom zentralen Maschinenrahmen auskragende Seitenflügel, die aufgrund der Bodeneingriffskräfte der daran befestigten Bodenwerkzeuge im Arbeitsbetrieb sozusagen nach hinten gezogen werden bzw. zur Überwindung der Bodeneingriffskräfte mit großen Zugkräften nach vorne gezogen werden müssen. Um die massiven Kräfte nicht allein über die Gelenke bzw. Anlenkung am zentralen Maschinenrahmen abfangen und entsprechend hohe Biegemomente in den Wurzelbereichen der auskragenden Flügel zu haben, können die Seitenabschnitte der auskragenden Bodenwerkzeuggruppen über Zugstreben abgespannt sein, die einerseits vom zentralen Maschinenrahmen bzw. der Längsmittelebene seitlich nach außen beabstandet an der Bodenwerkzeug-Baugruppe, beispielsweise einem Tragrahmen der Bodenwerkzeug-Baugruppe, und andererseits am zentralen Maschinenrahmen oder einer Anbauvorrichtung, mit der der zentrale Maschinenrahmen an einem Schlepper angebaut werden kann, angelenkt sein können. Kragt die Bodenwerkzeug-Baugruppe vom zentralen Maschinenrahmen seitlich rechts und links aus, können beispielsweise zwei Zugstreben pfeilartig oder V-förmig aufgespreizt angeordnet sein und sich beispielsweise von einem Deichselabschnitt oder einem vorderen Teil des Maschinenrahmens V-förmig nach hinten zu den Seitenflügeln erstrecken.

In ähnlicher Weise können auch die seitlich auskragenden Seitenflügel von Grünlandgeräten durch solche Zugstreben abgespannt werden, bspw. die Rechkreisel-Reihe eines Zetters, die bei großer Arbeitsbreite ebenfalls oft weit vom Maschinenrahmen auskragen und zur Bodenanpassung gelenkig segmentiert sein kann. Ähnliche Abspannungen können auch bei größeren Schwadern oder Mähmaschinen eingesetzt werden.

Die Zugstreben sind dabei üblicherweise starr ausgebildet, können aber auch über ein Gewinde bzw. eine Spindeleinrichtung in der Länge passend eingestellt werden, um die Seitenflügel der Funktionswerkzeug-Baugruppe in der gewünschten Weise abspannen zu können. Alternativ zu starren Zugstreben werden bisweilen auch Abspannseile von den Seitenflügeln zum zentralen Maschinenrahmen gespannt, um die aus dem Bodeneingriff resultierenden Reaktionskräfte abfangen zu können.

Ein Problem bei solchen Zugstreben ist der Umstand, dass sich der Abstand zwischen den Anlenkpunkten am Seitenflügel und am Maschinenrahmen bzw. der Anbauvorrichtung im Arbeitsbetrieb an sich permanent ändert, da die Seitenflügel im Arbeitsbetrieb zur Bodenanpassung oft beweglich gelagert sind, um auf- und abfahren bzw. nach Art von Flügeln auf- und abschwingen zu können, um sich der Bodenneigung, Hangkanten oder Bodenwellen anpassen zu können. Die Seitenflügel sind dabei oft abknickbar um liegende, näherungsweise fahrtrichtungsparallele Schwenkachsen gelagert, um ein Stück weit nach oben wippen oder auch nach unten überstrecken zu können, je nachdem, auf welche Geländeformation der Seitenflügel trifft. Bisweilen ist neben einer Schwenkachse in Maschinenrahmennähe auch noch eine weitere Schwenkachse oder mehrere Schwenkachsen im Seitenflügel selbst vorgesehen, um ein mehrgliedriges Verstellen zur feineren Bodenanpassung zu ermöglichen.

Bei solchen Auf- und Abbewegungen der Seitenteile der Funktionswerkzeug-Baugruppe verstellt sich die Geometrie und damit der Abstand zwischen den Anlenkpunkten der Zugstrebe, sodass je nach Verstellbewegung die Abspannwirkung der Zugstrebe abnimmt oder ein Überdehnen der Zugstrebe droht.

Andererseits werden die Seitenteile der Funktionswerkzeug-Baugruppe für den Straßentransport oft weggeklappt oder auch mehrachsig weggeschwenkt, um die zulässige Straßentransportbreite einhalten zu können. Je nach Kinematik der Anlenkung können die Seitenflügel beispielsweise um aufrechte Achsen nach hinten geklappt werden, um näherungsweise in der Spur des Schleppers nachzulaufen. Alternativ ist es auch bekannt, die Funktionswerkzeug-Baugruppe zunächst um eine liegende Querachse aufzuwippen und dann die Seitenflügel um die dann aufrechtstehenden Schwenkachsen, die an sich der Bodenanpassung dienen, nach vorne an den Maschinenrahmen anzuklappen.

Um solche Schwenk- und Klappbewegungen der Seitenflügel in die Transportstellung zu ermöglichen, können die Zugstreben beispielsweise an einem ihrer Anlenkpunkte ausgehängt werden. Bisweilen werden auch teleskopierbare Zugstreben verwendet, die zusammengeschoben werden können, wenn die Seitenflügel nach vorne geklappt werden. Bei Zugstreben in Form von Seilen können diese aufgewickelt oder in anderer Weise verstaut werden.

Landwirtschaftliche Bodenbearbeitungsgeräte mit verschiedenartig ausgebildeten Zugstreben sind beispielsweise aus den Schriften DE 34 22 254 C2, DE 82 28 255 U1, DE 36 31 874 A1 oder US 26,69,171 A bekannt.

Aus der Schrift US 3 198 550 A ist eine Mähmaschine bekannt, deren Mähbalken an einem Tragarm aufgehängt ist, der nach hinten wegschwenkbar ist und von einer Zugstrebe festgehalten ist, die mit ihrem vorderen Ende am Unterlenker des Schleppers befestigt ist. Die genannte Zugstrebe ist teleskopierbar und enthält eine Überlastkupplung, die bei Überlast auslöst und die Zugstrebe austeleskopieren lässt, sodass der Tragarm und damit der Mähbalken nach hinten schwenken kann. Ferner sind aus den Schriften DE 88 14 325 U1 und EP 33 11 650 B1 landwirtschaftliche Anbaugeräte bekannt, deren Maschinenrahmen um eine aufrechte Schwenkachse am Anbaubock gelagert und dadurch einlenken kann. Seitliche Federstreben dämpfen die Einlenkbewegung des Maschinenrahmens.

Die Schrift EP 33 11 650 B1 beschreibt nicht, dass die Zugstrebe andererseits an dem Seitenflügel angelenkt ist.

Der vorliegenden Erfindung liegt vor dem erläuterten Hintergrund die Aufgabe zugrunde, ein verbessertes landwirtschaftliches Boden- bzw. Grünlandbearbeitungsgerät der genannten Art zu schaffen, das Nachteile des Standes der Technik vermeidet und letzteren in vorteilhafter Weise weiterbildet. Insbesondere soll eine verbesserte Abspannung der Seitenteile der Funktionswerkzeug-Baugruppe erzielt werden, die auch bei Bodenanpassbewegungen der Seitenteile letztere mit einer definierten Abspannkraft abspannt und gleichzeitig ein Verbringen der Seitenteile in die Vorgewende- und/oder Transportstellung zulässt, ohne die Zugstrebe aufwendig aushängen oder in anderer Weise verstauen zu müssen.

Erfindungsgemäß wird die genannte Aufgabe durch ein landwirtschaftliches Boden- und/oder Grünlandbearbeitungsgerät gemäß Anspruch 1 gelöst. Bevorzugte Ausgestaltungen der Erfindung sind Gegenstand der abhängigen Ansprüche.

Es wird also vorgeschlagen, die Zugstrebe für den Arbeitsbetrieb elastisch streckbar auszubilden, um bei Bodenanpassbewegungen des abgespannten Seitenteils der Funktionswerkzeug-Baugruppe und einer damit einhergehenden Verstellung der Geometrie zwischen den Anlenkpunkten der Zugstrebe eine definierte Zug- bzw. Abspannkraft für den Seitenteil der Funktionswerkzeug-Baugruppe bereitzustellen und Überbeanspruchungen der Zugstrebe zu vermeiden. Gleichzeitig wird die Zugstrebe soweit längenveränderbar ausgebildet, dass sie Verstellbewegungen des Seitenteils in die Vorgewende- und/oder Transportstellung zulässt und kompensiert. Erfindungsgemäß ist die Zugstrebe teleskopierbar ausgebildet und weist zwischen zwei Zugstrebenabschnitten eine Federeinrichtung zum Übertragen der im Arbeitsbetrieb auf die Zugstrebe wirkenden Zugkräfte auf.

Die Zugstrebe kann im Arbeitsbetrieb beweglich bzw. längenveränderbar bleiben, um Abstandsänderungen der Zugstreben-Anlenkpunkte voneinander in Folge von Bodenanpassbewegungen der Funktionswerkzeug-Baugruppe ausgleichen zu können, ohne dass hierbei die Abspannkraft nachlassen oder die Zugstrebe überbeansprucht werden würde. Insbesondere kann die volle Abspann- bzw. Zugkraft der Zugstrebe über die Federeinrichtung gleichmäßig übertragen werden, zumindest soweit diese im normalen Arbeitsbetrieb bestimmungsgemäß anfallen. Der Federweg der Federeinrichtung ist insbesondere ausreichend groß bemessen, um die bei den bestimmungsgemäßen Bodenanpassbewegungen anfallenden Geometrieveränderungen, insbesondere die damit einhergehende Abstandsveränderung der Anlenkpunkte der Zugstrebe kompensieren zu können und über den gesamten bestimmungsgemäßen Verstellweg die gewünschte Abspann- bzw. Zugkraft gleichbleibend bereitstellen zu können. Nichtsdestotrotz kann der Federweg der Federeinrichtung endlich sein, beispielsweise durch einen Endanschlag, der die maximale Längung des die Federeinrichtung aufweisenden Zugstrebenteils begrenzt, beispielsweise wenn der von der Zugstrebe abgespannte Seitenteil der Funktionswerkzeug-Baugruppe gegen ein größeres Hindernis anfährt.

In vorteilhafter Weiterbildung der Erfindung kann die Zugstrebe insgesamt einen Längenverstellbereich aufweisen, der sehr viel größer ist als der Federweg der Federeinrichtung, um beim Verbringen des von der Zugstrebe abgespannten Seitenteils der Funktionswerkzeug-Baugruppe in die Vorgewende- und/oder Transportstellung größere Verstellwege bzw. Abstandsveränderungen zwischen den Anlenkpunkten ausgleichen zu können. Insbesondere kann die Zugstrebe eine über den Verstellweg der Federeinrichtung hinausgehende Teleskopierbarkeit aufweisen. Die über den Federweg der Federeinrichtung hinausgehende Längenverstellbarkeit der Zugstrebe kann insbesondere eine zugkraftfreie Verstellung vorsehen bzw. weitgehend ohne Übertragung von Zugkräften durch die Zugstrebe erfolgen.

Vorteilhafterweise kann die Zugstrebe zumindest zwei, ggf. aber auch drei oder vier benachbarte oder kettenförmig nacheinander angeordnete, aneinander verschieblich gelagerte Teleskopschüsse aufweisen, die zueinander ungefedert und/oder im Arbeitsbetrieb zueinander auf Anschlag stehen bzw. verriegelt sein können, sodass die im Arbeitsbetrieb anfallenden Zugkräfte der Zugstrebe von diesen Teleskopschüssen ohne Teleskopierbewegungen zueinander übertragen werden können. Im Arbeitsbetrieb sind die genannte Teleskopschüsse sozusagen starr bzw. bilden sie einen nicht längbaren Stabzug, der lediglich die materialbedingten Spannungsdehnungen zulässt, sonst aber nicht teleskopiert. Die von der Federeinrichtung bereitgestellte Federkraft wird von den auf Anschlag stehenden bzw. miteinander verriegelten Teleskopierschüssen direkt übertragen, ohne dass zwischen jeweils benachbarten Teleskopschusspaaren weitere Federeinrichtungen vorgesehen sein müssten.

Während die im Arbeitsbetrieb bestimmungsgemäß auf Zug belasteten Teleskopschüsse auf Anschlag stehen und damit ihre Länge bzw. Teleskoplänge nicht verändern, können die genannten Teleskopschüsse nichtsdestotrotz zusammengefahren werden bzw. in ihrer Teleskoplänge verkürzt werden, um ein Verbringen des abgespannten Seitenteils in die Vorgewende- und/oder Transportstellung zu ermöglichen. Je nach Kinematik der Aufhängung bzw. Schwenkbewegung in die Vorgewende- bzw. Transportstellung wäre es auch denkbar, ein oder mehrere Teleskopschusspaare, die im Arbeitsbetrieb miteinander verriegelt sind, zu entriegeln, um eine Längung der Zugstrebe für das Verbringen in die Transportstellung zu ermöglichen. Grundsätzlich einfacher in der Handhabung ist es jedoch, die Zugstrebe derart zu verbauen und/oder die Kinematik der Verstellung des abgespannten Seitenteils in die Vorgewende- und/oder Transportstellung so auszubilden, dass die Zugstrebe beim Verbringen in die Transport- und/oder Vorgewendestellung verkürzt wird. Hierdurch reicht es aus, die Teleskopschüsse im Arbeitsbetrieb in der maximal ausgefahrenen bzw. auf Anschlag stehenden Stellung zu haben, um die von der Federeinrichtung bereitgestellten Zugkräfte zu übertragen. Beim Verstellen in die Transport- bzw. Vorgewendestellung fahren die Teleskopschüsse einfach zusammen.

Die genannten Teleskopschüsse können dabei in sozusagen klassischer Weise ineinandergeschoben werden bzw. als Rohre oder Hohlprofile ausgebildet sein, die ineinanderfahren können. Alternativ können die Teleskopschüsse aber auch nach Art von länglichen, stab- oder schienenförmigen Schiebeführungsschlitten aneinander längsverschieblich gelagert sein, um beispielsweise nach Art einer ausziehbaren Schubladen-Schiebeführung beim Einteleskopieren und Austeleskopieren aneinander vorbeizugleiten.

Die Funktionswerkzeug-Baugruppe ist also insbesondere unter Teleskopieren der Zugstrebe in eine Vorgewende- bzw. Transportstellung verbringbar, insbesondere schwenkbar, ohne dass die Zugstrebe hierzu abgebaut werden müsste oder die Bewegung behindert oder gar sperrt.

Um eine straffe Abspannung mit einer definierten Zugkraft gleich von Anfang an zu haben, kann die Federeinrichtung in vorteilhafter Weiterbildung der Erfindung vorgespannt sein bzw. auch dann unter Spannung stehen, wenn die Zugstrebe vom abgespannten Seitenflügel her noch gar keine Zugkräfte erfährt. Insbesondere kann die Federeinrichtung auf ein Niveau vorgespannt sein, auf dem die Federeinrichtung die gewünschte Zug- bzw. Abspannkraft der Zugstrebe bereitstellt.

Die genannte Federeinrichtung kann dabei grundsätzlich verschieden ausgebildet sein. Beispielsweise kann eine pneumatische oder hydraulische Federeinrichtung vorgesehen sein, die über einen Druckspeicher vorgespannt sein kann.

In vorteilhafter Weiterbildung der Erfindung kann die Federeinrichtung aber insbesondere auch als mechanische Federeinrichtung ausgebildet sein, beispielsweise zumindest eine mechanische Zugfeder aufweisen, die mit ihren gegenüberliegenden Enden an zwei Zugstrebenteilen angebunden bzw. daran befestigt sein kann, um Zugkräfte zu übertragen.

Beispielsweise kann die Federeinrichtung einerseits an einem Anlenkstück der Zugstrebe und andererseits an einem Teleskopschuss der Zugstrebe angelenkt, insbesondere starr befestigt oder zugfest montiert sein. Um eine günstige Gewichtsverteilung zu erzielen, kann es vorteilhaft sein, wenn die Federeinrichtung an einem vorderen Anlenkstück der Zugstrebe montiert ist, mit dem die Zugstrebe am Maschinenrahmen oder einem Anbaurahmen oder -bock verbunden ist.

Grundsätzlich kann die Federeinrichtung aber auch in einem anderen Abschnitt der Zugstrebe vorgesehen sein, beispielsweise zwischen zwei Teleskopschüssen oder zwischen zwei Teilen desselben Teleskopschusses oder auch an einem hinteren Anlenkstück der Zugstrebe.

Um vor Verschmutzungen geschützt zu sein oder auch ein Einklemmen an der Federeinrichtung zu vermeiden, kann in Weiterbildung der Erfindung die Federeinrichtung in einem Hohlraum eines Zugstrebenteils aufgenommen sein, beispielsweise in einen Teleskopschuss integriert sein, wobei die Federeinrichtung einerseits an einem Bodenstück des einen Teleskopschusses befestigt und andererseits am Kopfstück des darin einfahrbaren anderen Teleskopschusses befestigt sein kann.

Beispielsweise kann die Federeinrichtung vom Rohrmantel eines Zugstrebenteils ummantelt sein.

Um die Zugkraft der Zugstrebe an das jeweilige Bodenbearbeitungsgerät bzw. dessen Rüstzustand anzupassen oder auch auf verschiedene Bodenverhältnisse abstimmen zu können, kann die Federeinrichtung lösbar montiert und/oder austauschbar an den Zugstrebenteilen befestigt sein, beispielsweise durch eine Schraubverbindung. Alternativ oder zusätzlich kann eine in ihrer Federhärte einstellbare Federeinrichtung vorgesehen sein.

Vorteilhafterweise kann die Zugstrebe auch eine Längeneinstellvorrichtung umfassen, um die Länge der Zugstrebe in deren Ausgangszustand, also ohne zugkraftbedingte Längung oder Verkürzung, einstellen und an die Geometrie des Bodenbearbeitungsgeräts anpassen zu können. Beispielsweise kann eines der Anlenkstücke der Zugstrebe über ein Schraubgewinde bzw. eine Spindelverstellung in der Länge verstellbar sein.

Alternativ oder zusätzlich kann aber auch eine Längeneinstellvorrichtung im Bereich der Anlenkelemente am abgespannten Seitenteil der Funktionswerkzeug-Baugruppe und/oder im Bereich des Anlenkelements am Maschinenrahmen bzw. am Anbaubock oder der Anbauvorrichtung vorgesehen sein. Beispielsweise kann ein dort vorgesehenes Verbindungsauge oder Kupplungselement zum Befestigen der Zugstrebe verschieblich gelagert und/oder beispielsweise durch eine Schraubspindel verstellbar sein.

Die Erfindung wird nachfolgend anhand eines bevorzugten Ausführungsbeispiels und zugehörigen Zeichnungen näher erläutert. In den Zeichnungen zeigen:
- Fig. 1:: eine perspektivische Frontansicht eines Bodenbearbeitungsgeräts in Form einer Scheibenegge nach einer vorteilhaften Ausführung der Erfindung, deren Seitenflügel der Funktionswerkzeug-Baugruppe über Zugstreben abgespannt sind,
- Fig. 2:: eine Draufsicht auf das Bodenbearbeitungsgerät aus Fig. 1, die die V-förmig aufgespreizte Anordnung der Zugstreben zeigt,
- Fig. 3:: eine Längsschnittansicht einer der Zugstreben aus den vorhergehenden Figuren, die die ineinanderschiebbaren Teleskopschüsse sowie die Federeinrichtung zwischen dem Anlenkschuss und dem darin einteleskopierbaren, nächsten Teleskopschuss zeigt, und
- Fig. 4:: eine ausschnittsweise, vergrößerte Schnittansicht der Zugstrebe aus Fig. 3 im Bereich der Federeinrichtung, die die Anordnung der Feder in einem Teleskoprohr und deren Befestigung an Boden- und Kopfabschnitten der benachbarten Teleskopschüsse zeigt.

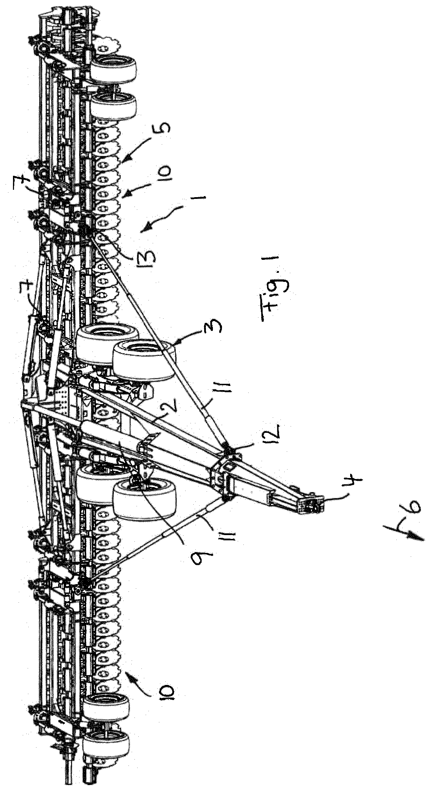

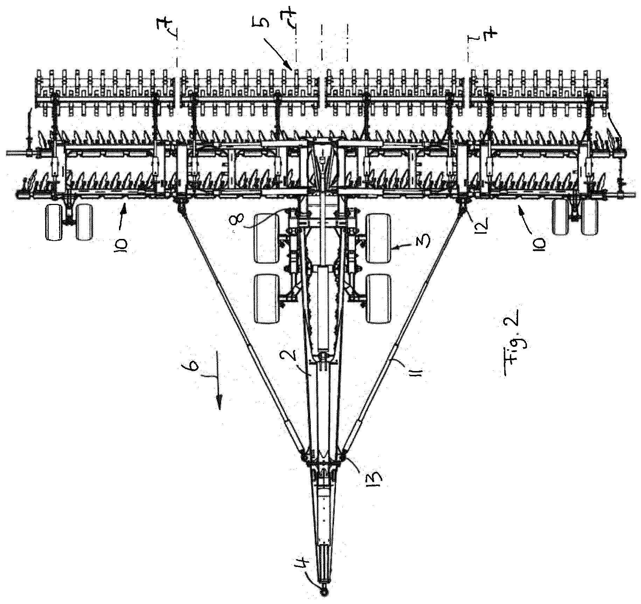

Wie die Figuren 1 und 2 zeigen, kann das landwirtschaftliche Boden- bzw. Grünlandbearbeitungsgerät 1 einen zentralen Maschinenrahmen 2 umfassen, der durch ein Fahrwerk 3 am Boden abgestützt sein kann und an seinem vorderen Endabschnitt mit einer Anbauvorrichtung 4 verbunden sein kann, mittels derer das Gerät 1 an einen nicht gezeigten Schlepper oder auch ein vorauslaufendes Gerät einer Maschinenkombination angebaut werden kann. Beispielsweise kann die Anbauvorrichtung 4 eine Deichsel oder auch einen Anbaubock zum Anbau über eine Dreipunktanlenkung umfassen. Insbesondere kann das Anbaugerät 1 als Aufsattelgerät ausgebildet sein und der über das Fahrwerk 3 am Boden abgestützte Maschinenrahmen 2 gegenüber dem Schlepper einlenken. Grundsätzlich sind aber auch andere Typen von Anbaugeräten möglich.

An dem Maschinenrahmen 2 ist zumindest eine Funktionswerkzeug-Baugruppe 5 angebracht, die beispielsweise zumindest eine sich quer zur Fahrtrichtung 6 erstreckende Werkzeugreihe umfassen kann. Ist das Gerät als Bodenbearbeitungsgerät 1 in Form einer Scheibenegge ausgebildet, kann die Funktionswerkzeug-Baugruppe 5 zumindest eine Reihe von Scharscheiben umfassen. Ist das Gerät als Bodenbearbeitungsgerät 2 in Form einer Kreiselegge ausgebildet, kann die Funktionswerkzeug-Baugruppe 5 zumindest eine Reihe von Eggenzinken umfassen, die um aufrechte Achsen rotieren können. Ist das Bodenbearbeitungsgerät 1 als Grubber ausgebildet, kann die Bodenbearbeitungs-Baugruppe 5 zumindest eine Reihe von Grubberwerkzeugen aufweisen.

Das Bodenbearbeitungsgerät 1 kann aber auch als Misch- bzw. Hybridgerät ausgebildet sein und Funktionswerkzeug-Baugruppen mit verschiedenen Funktionswerkzeugtypen oder in einer Funktionswerkzeug-Baugruppe 5 verschiedene Funktionswerkzeugtypen aufweisen.

Wie die Figuren 1 und 2 zeigen, kann die Funktionswerkzeug-Baugruppe 5 in der Arbeitsstellung quer zur Fahrtrichtung 6 vom Maschinenrahmen 2 nach rechts und links auskragen. Unabhängig hiervon kann die Funktionswerkzeug-Baugruppe 5 in einem Heckabschnitt des Maschinenrahmens 2 an letzterem angebaut sein, beispielsweise hinter dem Fahrwerk 3 angeordnet sein, wobei aber auch andere Konfigurationen möglich sind.

Die Funktionswerkzeug-Baugruppe 5 kann in sich beweglich ausgebildet sein, beispielsweise mehrere Baugruppensegmente umfassen, die zueinander um Schwenkachsen scharnieren können, die in der Arbeitsstellung liegend, näherungsweise fahrtrichtungsparallel ausgerichtet sein können, um den Werkzeugbaugruppe-Segmenten ein Auf- und Abschwingen bzw. Auf- und Abwippen relativ zueinander zu gestatten und hierdurch eine Bodenanpassung zu erzielen. Die genannten Schwenkachsen zwischen den Baugruppen-Segmenten sind in den Figuren 1 und 2 mit der Bezugsziffer 7 gekennzeichnet.

Um die weit auskragende Funktionswerkzeug-Baugruppe 5 in eine straßentransporttaugliche Transportstellung zu verbringen, kann ein mittlerer Abschnitt der Funktionswerkzeug-Baugruppe 5 um eine liegende Querachse 8 am Maschinenrahmen 2 gelagert und durch einen Stellaktor 9 beispielsweise in Form eines Hydraulikzylinders aufgewippt werden, sodass die in der Arbeitsstellung liegenden Schwenkachsen 7 in eine aufrechte Stellung kommen. Dies erlaubt es die Seitenflügel 10 nach vorne an den Maschinenrahmen 2 anzuklappen, um die Transportbreite entsprechend zu reduzieren.

Um im Arbeitsbetrieb die vom Bodeneingriff induzierten Reaktionskräfte in den Seitenflügeln 10 abfangen zu können, sind die Seitenflügel bzw. -teile 10 der Funktionswerkzeug-Baugruppe 5 über Zugstreben 11 abgespannt, die einerseits vom Maschinenrahmen 2 bzw. einer Längsmittelebene des Geräts 1 seitlich beabstandet an den Seitenflügeln 10 der Funktionswerkzeug-Baugruppe 5 angelenkt sind und andererseits an einem vorderen Abschnitt des Maschinenrahmens 2 angelenkt sind. Die seitenflügelseitigen Anlenkpunkte 12 können beispielsweise etwa bei der Hälfte oder in einem mittleren Abschnitt des seitlich vom Maschinenrahmen 2 auskragenden Seitenflügels 10 positioniert sein. Die maschinenrahmenseitigen Anlenkpunkte 13 der Zugstreben 11 können in einem vorderen Drittel des Maschinenrahmen 2 und/oder im Anschlussbereich der Anbauvorrichtung 4 vorgesehen sein.

Wie Figur 2 zeigt, können die Zugstreben 11 in der Arbeitsstellung des Geräts eine V-förmige, sich nach hinten aufspreizende Anordnung haben. Unabhängig hiervon können die Zugstreben 11 im Arbeitsbetrieb des Bodenbearbeitungsgeräts 1 zumindest näherungsweise in einer gemeinsamen liegenden Ebene angeordnet sein, vgl. Figur 1.

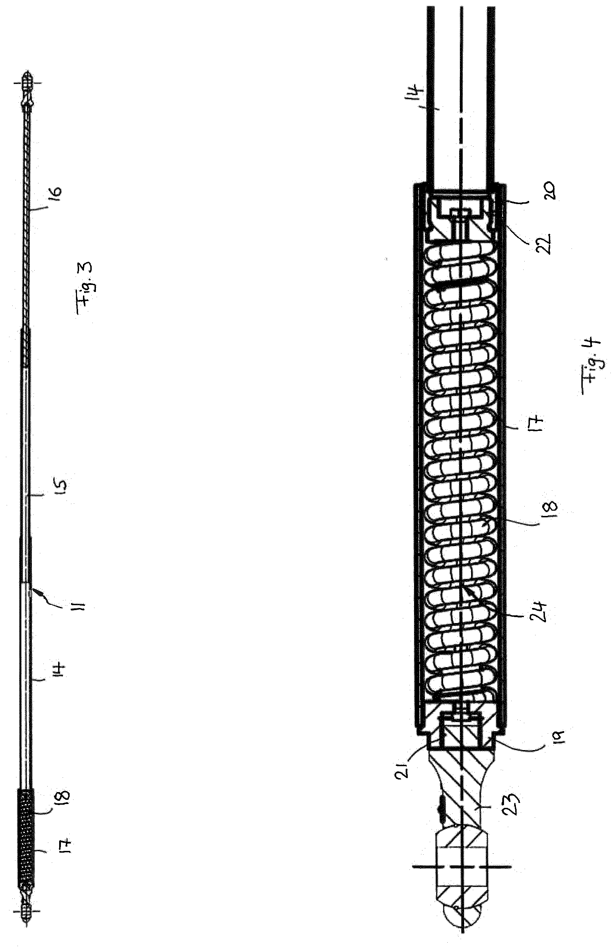

Wie Figur 3 zeigt, kann die Zugstrebe 11 teleskopierbar bzw. als Teleskopstange ausgebildet sein und mehrere Teleskopschüsse 14, 15, 16 - beispielsweise drei oder mehr Teleskopschüsse - aufweisen, die als Hohlprofile ausgebildet und ineinanderschiebbar sein können. Beispielsweise können die Teleskopschüsse 14, 15, 16 als hohle Rohr- oder Strangpressprofile ausgebildet sein und mit den Inne- und Außendurchmessern derart aufeinander abgestimmt sein, dass die Teleskopschüsse aneinander bzw. ineinander schiebegeführt sind bzw. füreinander eine Schiebeführung bilden.

Die genannten Teleskopschüsse 14, 15 und 16 können dabei zwischen ihren ein- und ausgefahrenen Endstellungen frei beweglich sein, sodass im Wesentlichen nur der Reibungswiderstand zu überwinden ist, um die Teleskopschüsse in die jeweilige Endstellung zu verbringen.

Wie die Figuren 3 und 4 zeigen, kann die Zugstrebe 11 einen weiteren Teleskopschuss 17 umfassen, in den eine Federeinrichtung 18 integriert sein kann, die die Zugkräfte, die die Zugstrebe 11 beaufschlagen, übertragen kann.

Der genannte Teleskopschuss 17, in den die Federeinrichtung 17 integriert ist, kann den Anlenkschuss der Zugstrebe 11 bilden, mit dem die Zugstrebe 11 an einem der Anlenkpunkte 12 und 13 angelenkt werden kann. Beispielsweise kann der genannte Teleskopschuss 17 an seinem den anderen Teleskopschüssen 14, 15, 16 abgewandten Enden ein Lagerauge 19 umfassen, um beispielsweise am Maschinenrahmen 2 angebolzt zu werden.

Die Federeinrichtung 18 ist vorteilhafterweise im Inneren des ebenfalls als Hohlprofil ausgebildeten Teleskopschusses 17 untergebracht, wobei der Teleskopschuss 17 von seinem Profil her an dem benachbarten Teleskopschuss 14 angepasst ist, um teleskopieren zu können bzw. eine Schiebeführung zu bilden.

Die Federeinrichtung 18 kann mechanisch ausgebildet sein und beispielsweise eine Schraubenfeder umfassen, die im Hohlraum des Teleskopschusses 17 untergebracht ist.

Die Federeinrichtung 18 kann dabei einerseits am Bodenteil 19 des Teleskopschusses 17 und andererseits am Kopfteil 20 des benachbarten Teleskopschusses 14 befestigt sein, der in den die Federeinrichtung 18 aufnehmenden Teleskopschuss 17 einfahren kann bzw. ausfahren kann, soweit dies die Federeinrichtung 18 zulässt.

Die Federeinrichtung 18 kann dabei - beispielsweise von ihrer Länge her - derart konfiguriert sein, dass die vollen Zugkräfte der Zugstrebe 11 von der Federeinrichtung 18 übertragen werden und die im bestimmungsgemäßen Arbeitsbetrieb des Geräts 1 anfallenden Verstellbewegungen der Seitenflügel 1 und die damit einhergehenden Abstandsänderungen zwischen den Anlenkpunkten 12 und 13 vom Federweg der Federeinrichtung 18 aufgenommen und zugelassen werden. Mit anderen Worten ist der Federweg der Federeinrichtung 18 ausreichend groß, um auch bei Bodenanpassbewegungen der Seitenflügel des Geräts 1 gleichmäßig eine definierte Abspann- bzw. Zugkraft über die Zugstrebe 11 auf die genannten Seitenflügel 10 zu geben.

Andererseits werden die Veränderungen des Abstands zwischen den Anlenkpunkten 12 und 13 beim Verbringen der Funktionswerkzeugbaugruppe 5 in die Vorgewende- und/oder Transportstellung nicht vom Federweg der Federeinrichtung 18 kompensiert, sondern von der Teleskopierbarkeit der weiteren Teleskopschüsse 14, 15 und 16. Wenn die Seitenflügel 10 der Funktionswerkzeugbaugruppe 5 zunächst um die liegende Querachse 8 nach vorne aufgewippt werden und sodann um die - nach dem Aufwippen aufrechtstehenden - Schwenkachsen 7 nach vorne an den Maschinenrahmen 2 angeklappt werden, teleskopieren die beiden Zugstreben 11 an den Teleskopschüssen 14, 15 und 16 ein.

Wie Figur 4 zeigt, kann die Federeinrichtung 18 vorteilhafterweise lösbar an den beiden Zugstrebenteilen, die durch die Federeinrichtung 11 miteinander verbunden sind, befestigt sein, wobei die Befestigung vorteilhafterweise werkzeugfrei lösbar sein kann.

Insbesondere kann die Federeinrichtung 18 an ihren Enden jeweils ein Schraubverbindungsteil 21 und 22 aufweisen, mittels derer die Federeinrichtung 18 mit dem Boden 19 des Teleskopschusses 17 oder direkt mit dem Anlenkstück 23 der Zugstrebe 11 verschraubt und andererseits mit dem Kopf 20 des Teleskopschusses 14 verschraubt sein kann.

Anstelle solcher Schraubverbindungen 21 und 22 können aber auch andere lösbare Verbindungsmittel beispielsweise in Form eines Bajonettverschlusses oder einer Querbolzenverbindung vorgesehen sein, um die Federeinrichtung 18 lösbar an den beiden angrenzenden Zugstrebenteilen befestigen zu können.

Die Federeinrichtung 18 kann vorteilhafterweise vorgespannt verbaut sein, wobei eine Vorspannvorrichtung 24 beispielsweise einen Druckstab im Inneren der Schraubenfeder aufweisen kann, der die Endstücke der Federeinrichtung 18 in eine vorgespannte Stellung auseinanderdrücken kann.

## Patentansprüche

1. Landwirtschaftliches Arbeitsgerät mit einem Maschinenrahmen (2), zumindest einer vom Maschinenrahmen (2) seitlich quer zur Fahrtrichtung auskragenden Funktionswerkzeug-Baugruppe (5) sowie zumindest einer Zugstrebe (11), durch die ein Seitenflügel (10) der Funktionswerkzeug-Baugruppe (5) abgespannt ist, der vom Maschinenrahmen (2) seitlich quer zur Fahrtrichtung zu einer Seite hin auskragt und im Arbeitsbetrieb zur Bodenanpassung um eine liegende, näherungsweise fahrtrichtungsparallele Schwenkachse auf- und abschwingbar gelagert ist, wobei die genannte Zugstrebe (11) einerseits an einem in Fahrtrichtung vorderen Abschnitt des Maschinenrahmens (2) angelenkt und andererseits vom Maschinenrahmen (2) seitlich beabstandet an dem genannten Seitenflügel (10) angelenkt ist, wobei die Zugstrebe (11) teleskopierbar ausgebildet ist und zwischen zwei Zugstrebenabschnitten (17; 14) eine Federeinrichtung (18) zum Übertragen der im Arbeitsbetrieb auf die Zugstrebe (11) einwirkenden Zugkräfte aufweist.

2. Landwirtschaftliches Arbeitsgerät nach dem vorhergehenden Anspruch, wobei die Zugstrebe (11) zumindest zwei benachbarte, aneinander verschieblich gelagerte Teleskopschüsse (14, 15, 16) aufweist, die zueinander ungefedert und im Arbeitsbetrieb zum teleskopierwegfreien Übertragen von Zugkräften miteinander auf Anschlag stehen und/oder miteinander verriegelt sind.

3. Landwirtschaftliches Arbeitsgerät nach dem vorhergehenden Anspruch, wobei die Funktionswerkzeug-Baugruppe (5) unter Teleskopieren der Zugstrebe (11) in eine Vorgewende- und/oder Transportstellung schwenkbar ist, wobei die Teleskopschüsse (14, 15, 16) der Zugstrebe (11) im Arbeitsbetrieb in der maximal ausgefahrenen Stellung zur Übertragung der von der Federeinrichtung (18) bereitgestellten Zugkräfte sind und beim Verstellen der Funktionswerkzeugbaugruppe (5) in die Transport- und/oder Vorgewendestellung in eine verkürzte Stellung zusammenfahrbar sind.

4. Landwirtschaftliches Arbeitsgerät nach einem der vorhergehenden Ansprüche, wobei der Maschinenrahmen (2) von einem Fahrwerk (3) am Boden abgestützt ist und das Arbeitsgerät (1) als Aufsattelgerät ausgebildet ist.

5. Landwirtschaftliches Arbeitsgerät nach einem der vorhergehenden Ansprüche, wobei die Federeinrichtung (18) im Inneren eines Teleskopschusses (17) der Zugstrebe (11) aufgenommen ist, wobei die Federeinrichtung (18) einerseits an einem Bodenteil (19) des die Federeinrichtung (18) aufnehmenden Teleskopschusses (17) befestigt und andererseits an einem Kopfteil (20) des in den genannten Teleskopschuss (17), der die Federeinrichtung (18) aufnimmt, eintauchenden Teleskopschusses (14) befestigt ist.

6. Landwirtschaftliches Arbeitsgerät nach einem der vorhergehenden Ansprüche, wobei die Federeinrichtung (18) lösbar an den beiden Zugstrebenteilen, die durch die Federeinrichtung (18) miteinander verbunden sind, befestigt ist und durch Lösen der Befestigungsmittel austauschbar montiert ist.

7. Landwirtschaftliches Arbeitsgerät nach dem vorhergehenden Anspruch, wobei die Federeinrichtung (18) an gegenüberliegenden Endabschnitten Schraubverbindungsteile (21, 22) zum lösbaren Verschrauben mit den beiden Zugstrebenteilen, die durch die Federeinrichtung (18) verbunden sind, aufweist.

8. Landwirtschaftliches Arbeitsgerät nach einem der vorhergehenden Ansprüche, wobei eine Vorspannvorrichtung (24) zum Vorspannen der Federeinrichtung (18) vorgesehen ist.

9. Landwirtschaftliches Arbeitsgerät nach dem vorhergehenden Anspruch, wobei die Vorspannvorrichtung (24) einstellbar ausgebildet und die Federeinrichtung (18) auf ein Zugkraftniveau vorspannbar ist, das der Zugkraft der Zugstrebe (11) im Arbeitsbetrieb entspricht.

10. Landwirtschaftliches Arbeitsgerät nach einem der vorhergehenden Ansprüche, wobei die Federeinrichtung (18) einen Federweg besitzt, der ausreichend groß ist, um die im Arbeitsbetrieb bestimmungsgemäß auftretenden, durch Bodenanpassbewegungen induzierten, Abstandsänderungen der Anlenkpunkte (12, 13) der Zugstrebe (11) zu kompensieren und auch bei Bewegungen des Seitenflügels (10) der Funktionswerkzeug-Baugruppe (5) im Arbeitsbetrieb eine gleichmäßige Zugstreben-Zugkraft auf dem Seitenflügel (10) bereitzustellen.

11. Landwirtschaftliches Arbeitsgerät nach einem der vorhergehenden Ansprüche, wobei die Zugstrebe (11) einen Längenverstellbereich aufweist, der ein Vielfaches des Federwegs der Federeinrichtung (18) beträgt.

12. Landwirtschaftliches Arbeitsgerät nach dem vorhergehenden Anspruch, wobei die Zugstrebe (11) zumindest ein Teleskopschusspaar umfasst, das zwischen seinen ein- und ausgefahrenen Endstellungen freibeweglich ist und einen Teleskopierweg bereitstellt, der ein Vielfaches des Federwegs der Federeinrichtung (18) beträgt.

13. Landwirtschaftliches Arbeitsgerät nach einem der vorhergehenden Ansprüche, wobei die Federeinrichtung (18) an einem Anlenkstück der Zugstrebe (11) befestigt ist, wobei das Anlenkstück vorzugsweise ein in Fahrtrichtung vorderes Anlenkstück der Zugstrebe (11) ist.

14. Landwirtschaftliches Arbeitsgerät nach einem der vorhergehenden Ansprüche, wobei der von der Zugstrebe (11) abgespannte Seitenflügel (10) der Funktionswerkzeug-Baugruppe (5) aus der quer vom Maschinenrahmen (2) auskragenden Arbeitsstellung in eine an den Maschinenrahmen (2) angeklappte Transportstellung verbringbar ist und dabei die Zugstrebe (11) einteleskopiert.

15. Landwirtschaftliches Arbeitsgerät nach einem der vorhergehenden Ansprüche, wobei die Funktionswerkzeug-Baugruppe (5) eine Bodenwerkzeug-Baugruppe ist und zumindest eine Reihe von Bodeneingriffswerkzeugen, insbesondere Scharscheiben und/oder Eggenzinken und/oder Grubberzinken, aufweist.

## Claims

1. Agricultural implement having a machine frame (2), at least one functional tool assembly (5) projecting laterally from the machine frame (2) transversely to the direction of travel, and at least one tension strut (11), by means of which a side wing (10) of the functional tool assembly (5) is braced, which side wing projects laterally from the machine frame (2) transversely to the direction of travel to one side and is mounted so as to swing up and down about a horizontal pivot axis approximately parallel to the direction of travel in order to adapt to the soil during operation, wherein said tension strut (11) is articulated to a front section of the machine frame (2) in the direction of travel and also to said side wing (10) at a lateral distance from the machine frame (2), wherein the tension strut (11) is telescopic and comprises a spring device (18) between two tension strut sections (17; 14) for transmitting the tractive forces acting on the tension strut (11) during operation.

2. Agricultural implement according to the preceding claim, wherein the tension strut (11) comprises at least two adjacent telescopic sections (14, 15, 16) that are mounted so as to be displaceable relative to one another, are unsprung relative to one another and, in working operation, are in abutment with one another and/or are interlocked with one another for the telescopic travel-free transmission of tractive forces.

3. Agricultural implement according to the preceding claim, wherein the functional tool assembly (5) can be pivoted into a headland and/or transport position by telescoping the tension strut (11), wherein the telescopic sections (14, 15, 16) of the tension strut (11) are in the maximum extended position during working operation for transmitting the tractive forces provided by the spring device (18) and can be retracted into a shortened position when the functional tool assembly (5) is moved into the transport and/or headland position.

4. Agricultural implement according to any one of the preceding claims, wherein the machine frame (2) is supported on the ground by a chassis (3) and the implement (1) is configured as a semi-mounted implement.

5. Agricultural implement according to any one of the preceding claims, wherein the spring device (18) is accommodated inside a telescopic section (17) of the tension strut (11), wherein the spring device (18) is fastened to a base part (19) of the telescopic tube (17) receiving the spring device (18) and also to a head part (20) of the telescopic tube (14) immersed in said telescopic tube (17) that receives the spring device (18).

6. Agricultural implement according to any one of the preceding claims, wherein the spring device (18) is detachably attached to the two tension strut parts, which are connected to each other by the spring device (18), and is mounted interchangeably by releasing the fastening means.

7. Agricultural implement according to any one of the preceding claims, wherein the spring element (18) has screw connection parts (21, 22) at opposite end portions for detachable screwing to the two tension strut parts which are connected by the spring device (18).

8. Agricultural implement according to any one of the preceding claims, wherein a pretensioning device (24) is provided for pretensioning the spring device (18).

9. Agricultural implement according to any one of the preceding claims, wherein the pretensioning device (24) is configured to be adjustable and the spring device (18) can be pretensioned to a tractive force level that corresponds to the tractive force of the tension strut (11) in working operation.

10. Agricultural implement according to any one of the preceding claims, wherein the spring device (18) has a spring path that is sufficient to compensate for the changes in distance of the linkage points (12, 13) of the traction strut (11) that occur as intended in working operation and are induced by soil contact movements, and also to provide a uniform tractive force on the side wing (10) of the functional tool assembly (5) during movements of the side wing (10) in working operation.

11. Agricultural implement according to any one of the preceding claims, wherein the tension strut (11) has a length adjustment range that is a multiple of the spring path of the spring device (18).

12. Agricultural implement according to any one of the preceding claims, wherein the tension strut (11) comprises at least one telescopic section pair that is freely movable between its retracted and extended end positions and provides a telescopic path that is a multiple of the spring path of the spring device (18).

13. Agricultural implement according to any one of the preceding claims, wherein the spring device (18) is attached to a linkage piece of the tension strut (11), wherein the linkage piece is preferably a front linkage piece of the tension strut (11) in the direction of travel.

14. Agricultural implement according to any one of the preceding claims, wherein the side wing (10) of the functional tool assembly (5), which is braced by the tension strut (11), can be moved from the working position projecting transversely from the machine frame (2) into a transport position folded against the machine frame (2), thereby telescoping the tension strut (11).

15. Agricultural implement according to any one of the preceding claims, wherein the functional tool assembly (5) is a soil tool assembly and has at least one row of soil engaging tools, in particular coulter discs and/or harrow tines and/or cultivator tines.

## Revendications

1. Appareil de travail agricole avec un châssis de machine (2), au moins un module d'outil fonctionnel (5) dépassant en porte-à-faux latéralement du châssis de machine (2) de manière transversale par rapport à la direction de déplacement, ainsi qu'au moins un tirant (11), par lequel une aile latérale (10) du module d'outil fonctionnel (5) est haubanée, qui dépasse en porte-à-faux du châssis de machine (2) latéralement de manière transversale par rapport à la direction de déplacement en direction d'un côté et qui est montée de manière à pouvoir être relevée et abaissée par basculement autour d'un axe de pivotement horizontal, quasiment parallèle à la direction de déplacement pour s'adapter au sol dans le mode de travail, dans lequel ledit tirant (11) est articulé d'une part sur une section avant dans la direction de déplacement du châssis de machine (2) et est articulé d'autre part sur ladite aile latérale (10) à distance latéralement du châssis de machine (2), dans lequel le tirant (11) est réalisé de manière télescopique et présente un dispositif de ressort (18) destiné à transmettre les forces de traction agissant sur le tirant (11) dans le mode de travail entre deux sections de tirant (17 ; 14).

2. Appareil de travail agricole selon la revendication précédente, dans lequel le tirant (11) présente au moins deux flèches télescopiques (14, 15, 16) adjacentes, montées de manière à pouvoir coulisser l'une sur l'autre, qui sont sans suspension l'une par rapport à l'autre et sont en butée l'une avec l'autre dans le mode de travail pour transmettre des forces de traction sans trajet de mouvement télescopique et/ou sont verrouillées l'une à l'autre.

3. Appareil de travail agricole selon la revendication précédente, dans lequel le module d'outil fonctionnel (5) peut être pivoté dans une position de tournière et/ou de transport en déplaçant de manière télescopique le tirant (11), dans lequel les flèches télescopiques (14, 15, 16) du tirant (11) sont dans le mode de travail dans la position sortie au maximum pour transmettre les forces de traction fournies par le dispositif à ressort (18) et peuvent être regroupées dans une position raccourcie lors de l'ajustement du module d'outil fonctionnel (5) dans la position de transport et/ou la position de tournière.

4. Appareil de travail agricole selon l'une quelconque des revendications précédentes, dans lequel le châssis de machine (2) est soutenu par un train de roulement (3) sur le sol et l'appareil de travail (1) est réalisé en tant qu'appareil semi-porté.

5. Appareil de travail agricole selon l'une quelconque des revendications précédentes, dans lequel le dispositif à ressort (18) est logé à l'intérieur d'une flèche télescopique (17) du tirant (11), dans lequel le dispositif à ressort (18) est fixé d'une part sur une partie de sol (19) de la flèche télescopique (17) logeant le dispositif à ressort (18) et d'autre part sur une partie de tête (20) de ladite flèche télescopique (14) s'enfonçant dans ladite flèche télescopique (17), qui loge le dispositif à ressort (18).

6. Appareil de travail agricole selon l'une quelconque des revendications précédentes, dans lequel le dispositif à ressort (18) est fixé de manière amovible sur les deux parties de tirant, qui sont reliées entre elles par le dispositif à ressort (18), et est monté de manière interchangeable par desserrage des moyens de fixation.

7. Appareil de travail agricole selon la revendication précédente, dans lequel le dispositif à ressort (18) présente sur des sections d'extrémité opposées des parties de liaison par vissage (21, 22) destinées à être vissées de manière amovible aux deux parties de tirant, qui sont reliées par le dispositif à ressort (18).

8. Appareil de travail agricole selon l'une quelconque des revendications précédentes, dans lequel un dispositif de précontrainte (24) est prévu pour précontraindre le dispositif à ressort (18).

9. Appareil de travail agricole selon la revendication précédente, dans lequel le dispositif de précontrainte (24) est réalisé de manière réglable et le dispositif à ressort (18) peut être précontraint sur un niveau de force de traction, qui correspond à la force de traction du tirant (11) dans le mode de travail.

10. Appareil de travail agricole selon l'une quelconque des revendications précédentes, dans lequel le dispositif à ressort (18) possède un trajet de ressort, qui est suffisamment grand pour compenser des modifications de distance des points d'articulation (12, 13) du tirant (11) apparaissant selon l'usage prévu dans le mode de travail, induites par des déplacements s'adaptant au sol et pour fournir, également en cas de déplacements de l'aile latérale (10) du module d'outil fonctionnel (5) dans le mode de travail, une force de traction de tirant homogène sur l'aile latérale (10).

11. Appareil de travail agricole selon l'une quelconque des revendications précédentes, dans lequel le tirant (11) présente une zone d'ajustement de longueur, qui est un multiple du trajet de ressort du dispositif à ressort (18).

12. Appareil de travail agricole selon la revendication précédente, dans lequel le tirant (11) comprend au moins une paire de flèches télescopiques, qui est mobile librement entre ses positions d'extrémité rentrée et sortie et fournit un trajet de mouvement télescopique, qui est un multiple du trajet de ressort du dispositif à ressort (18).

13. Appareil de travail agricole selon l'une quelconque des revendications précédentes, dans lequel le dispositif à ressort (18) est fixé sur une pièce d'articulation du tirant (11), dans lequel la pièce d'articulation est de préférence une pièce d'articulation avant dans la direction de déplacement du tirant (11).

14. Appareil de travail agricole selon l'une quelconque des revendications précédentes, dans lequel l'aile latérale (10) haubannée par le tirant (11) du module d'outil fonctionnel (5) peut être amenée depuis la position de travail dépassant en porte-à-faux du châssis de machine (2) dans une position de transport rabattue sur le châssis de machine (2) et ce faisant le tirant (11) est rentré par un mouvement télescopique.

15. Appareil de travail agricole selon l'une quelconque des revendications précédentes, dans lequel le module d'outil fonctionnel (5) est un module d'outil au sol et présente au moins une rangée d'outils de prise avec le sol, en particulier des disques de soc et/ou des dents de herse et/ou des dents de cultivateur.
